# EUROPÄISCHE PATENTANMELDUNG

(11) **EP 2 660 081 A1**
(43) Veröffentlichungstag der Anmeldung: **06.11.2013**
(21) Anmeldenummer: 13164846.1
(22) Anmeldetag: 23.04.2013
(51) Int. Cl.: B60C 11/12

(54) **Laufstreifenprofil eines Fahrzeugreifens**

(30) Priorität: 04.05.2012 DE 102012103946
(71) Anmelder: Continental Reifen Deutschland GmbH, 30165 Hannover (DE)
(72) Erfinder: Wüst, Alexander, 30926 Seelze (DE); Fernandez, Tomas, 30177 Hannover (DE); Goncalves Ankiewicz, Amélia Olga, 30559 Hannover (DE); Rittweger, Stefan, 30163 Hannover (DE); Buchinger, Thomas, 30974 Wennigsen (DE); Dobczyk, Klaudia, 30419 Hannover (DE); Pokutta-Paskaleva, Anastassia, 30161 Hannover (DE)
(74) Vertreter: Preusser, Andrea

(57) **Zusammenfassung**

Laufstreifenprofil (1) für einen Fahrzeugreifen mit Profilpositiven wie Profilblöcken oder Laufstreifenbändern (3), welche Feineinschnitte (2) aufweisen, wobei die Feineinschnitte (2) in Aufsicht eine hinterschnittene etwa Ω-förmige Geometrie aufweisen:
- mit zwei in etwa in axialer Richtung angeordneten axialen Abschnitten (5,6), welche auf einer gemeinsamen, gedachten Geraden mit einem Abstand (a) zueinander angeordnet sind,
- mit einer zwischen diesen axialen Abschnitten (5, 6) angeordneten mittigen Vorwölbung (7), wobei die Vorwölbung (7) eine in axialer Richtung gemessene maximale Ausdehnung (b) aufweist und
- wobei a < b ist, so dass Hinterschneidungen (10) gebildet sind; die Erfindung zeichnet sich dadurch aus, dass die Feineinschnittwände (8, 9) der axialen Abschnitte (5, 6) und/oder die Feineinschnittwände (8, 9) des sich axial erstreckenden Bereiches der Vorwölbung (7) eine würfel- oder pyramidenähnliche Struktur (14) aufweisen, wobei die Struktur (14) derart angeordnet ist, dass es quer zur Längserstreckung des Feineinschnittes (2) punktförmige tiefste Stellen (11) und punktförmige höchste Stellen (12) gibt.

## Beschreibung

Die Erfindung betrifft ein Laufstreifenprofil eines Fahrzeugreifens mit Profilpositiven wie Profilblöcken oder Laufstreifenbändern, welche Feineinschnitte aufweisen, wobei der Feineinschnitt durch zwei parallel zueinander und beabstandet voneinander angeordneten Feineinschnittwänden gebildet ist und wobei die Feineinschnitte in Aufsicht eine etwa Ωförmige Geometrie aufweisen:
- mit zwei in etwa in axialer Richtung angeordneten axialen Abschnitten, welche auf einer gemeinsamen, gedachten Geraden mit einem Abstand a zueinander angeordnet sind,
- mit einer zwischen diesen axialen Abschnitten angeordneten mittigen Vorwölbung, wobei die Vorwölbung eine in axialer Richtung gemessene maximale Ausdehnung b aufweist und
- wobei a < b ist, so dass Hinterschneidungen gebildet sind.

Feineinschnitte dienen beispielsweise bei Nutzfahrzeugreifen dazu, bei nasser Fahrbahn den Wasserfilm zu zertrennen, um bessere Nasseigenschaften dieses Laufstreifens zu erhalten.

Bei PKW-Reifen sind die Feineinschnitte bei Fahrzeugreifen für den Einsatz unter winterlichen Fahrbedingungen ausgebildet und dienen beispielsweise dazu, die Fahreigenschafen auf winterlicher Fahrbahn zu verbessern, indem vermehrt Griffkanten zur Verfügung gestellt werden und indem der in den Feineinschnitten aufgenommene Schnee die Haftung des Reifens durch eine Schnee-Schnee-Verzahnung erhöht.

Üblicherweise weisen Feineinschnitte eine Breite von 0,4 mm bis 3 mm auf.

Ein Laufstreifenprofil gemäß dem Oberbegriff ist aus der DE 100 49 936 B4 bekannt geworden. Die DE 100 49 936 B4 hat ein Laufstreifenprofil zum Gegenstand, welches aus Profilblöcken besteht, welche Feineinschnitte mit Ω-förmiger bzw. puzzleteilartiger Geometrie aufweisen. Eine derartige Ausbildung der Feineinschnitte bewirkt eine Abstützung und somit Versteifung der Profilblöcke bzw. -bänder. Die Abstützung ist durch gegenseitige Abstützeffekte von gegenüberliegenden Feineinschnittswänden erhalten. Durch die Ω-förmige Geometrie des Feineinschnittes sind die Abstützeffekte in allen Richtungen erhalten.

Man ist bestrebt, die Fahreigenschaften des Reifens weiter zu verbessern.

Es ist die Aufgabe der Erfindung, ein Laufstreifenprofil eines Fahrzeugreifens zur Verfügung zu stellen, das verbesserte Wintereigenschaften als auch verbesserte Trockenbremseigenschaften aufweist.

Gelöst wird die Aufgabe, indem die Feineinschnittwände der axialen Abschnitte und/oder die Feineinschnittwände des sich axial erstreckenden Bereiches der Vorwölbung eine würfel- oder pyramidenähnliche Struktur aufweisen, wobei die Struktur derart angeordnet ist, dass es quer zur Längserstreckung des Feineinschnittes punktförmige tiefste Stellen und punktförmige höchste Stellen gibt.

Es ist erfindungsgemäß ein Laufstreifenprofil geschaffen, das - in Aufsicht auf einen Feineinschnitt - durch eine etwa Ω-förmige Geometrie Abstützungseffekte in allen Richtungen zwischen benachbarten Profilblock- oder -bandabschnitten bewirkt. Die Ωförmige Geometrie kann gleichfalls als pilzartige Geometrie beschrieben werden. Die Abstützungseffekte sind durch die würfel- oder pyramidenähnliche Struktur der axialen Abschnitte der Feineinschnittwände verstärkt und können als Verschränkungseffekte bezeichnet werden. Die Spitzen der würfel- oder pyramidenähnliche Struktur weisen in etwa in Umfangsrichtung des Reifens. Im Durchlauf des Reifens auf der Fahrbahnoberfläche verformen sich die Profilelemente des Laufstreifens. Die Art und Intensität dieser Verformung wird u.a. durch die Geometrie der in diesem Profilelement angeordneten Feineinschnitte bestimmt. Bei dem erfindungsgemäßen Laufstreifen findet nur eine vergleichsweise geringe Verformung der Profilelemente statt, da sich die gegenüberliegenden Feineinschnittwände eines Feineinschnittes durch ihre würfel- oder pyramidenähnliche Struktur ineinander Verschränken und somit die Beweglichkeit beschränken.

Es ist eine erhöhte Steifigkeit der Profilelemente erreicht, welche Vorteile für das Trockenbremsen sowie für den Rollwiderstand bringt.
"Axiale Richtung" meint die Richtung entlang der Reifenachse.
"Umfangsrichtung" meint die Richtung entlang des Reifenabrollens.
"Radiale Richtung" meint die Richtung vom Reifenmittelpunkt zum Laufstreifen.
"Breite des Feineinschnittes" meint die Ausdehnung eines Feineinschnittes quer zu seiner Längserstreckung.
"Höhe der Feineinschnittwand" meint die komplette Erstreckung der Feineinschnittwand in radialer Richtung.

In einer Ausführungsform der Erfindung ist die würfel- oder pyramidenähnliche Struktur über die gesamte Höhe der Feineinschnittwände angeordnet. Die Höhe wird in radialer Richtung gemessen. Es ist eine hohe Steifigkeit des den Feineinschnitt aufweisenden Profilelementes erreicht. Es sind zudem durch die Zick-Zack-Ausbildung des Feineinschnittes im Bereich der an der Oberfläche ausstreichenden würfel- oder pyramidenähnlichen Struktur zusätzliche Kanten für verbesserte Wintereigenschaften zur Verfügung gestellt.

In einer anderen Ausführungsform nimmt die würfel- oder pyramidenähnliche Struktur etwa 2/3 der Höhe der Feineinschnittwände ein, wobei die Struktur von der Profiloberfläche beginnend, angeordnet ist. Hierdurch ist die Steifigkeits des Profilelementes über dessen Abrieb vergleichmäßigt, in dem im weit angefahrenen Zustand des Laufstreifenprofils keine Verschränkungseffekte im letzten Drittel der Feineinschnittstiefe mehr auftreten, denn ein weit angefahrener Profilblock ist per se steifer als ein Profilblock mit noch hoher Profiltiefe. Es sind durch die Zick-Zack-Ausbildung des Feineinschnittes im Bereich der an der Oberfläche ausstreichenden würfel- oder pyramidenähnlichen Struktur zusätzliche Kanten für verbesserte Wintereigenschaften zur Verfügung gestellt.

Vorteilhaft ist es, wenn in Aufsicht auf den Feineinschnitt, dessen Richtungsänderungen im Feineinschnittverlauf durch Radien gebildet sind.

Ein derartiges Laufstreifenprofil ist in einem Fahrzeugreifen, vorzugsweise einem Nutzfahrzeugreifen oder einem PKW-Reifen einzusetzen.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine dreidimensionale Ansicht eines Laufstreifenprofils eines Fahrzeugreifens mit Feineinschnitten in den Profilbändern;
Fig. 2 eine dreidimensionale Darstellung eines Feineinschnittes.

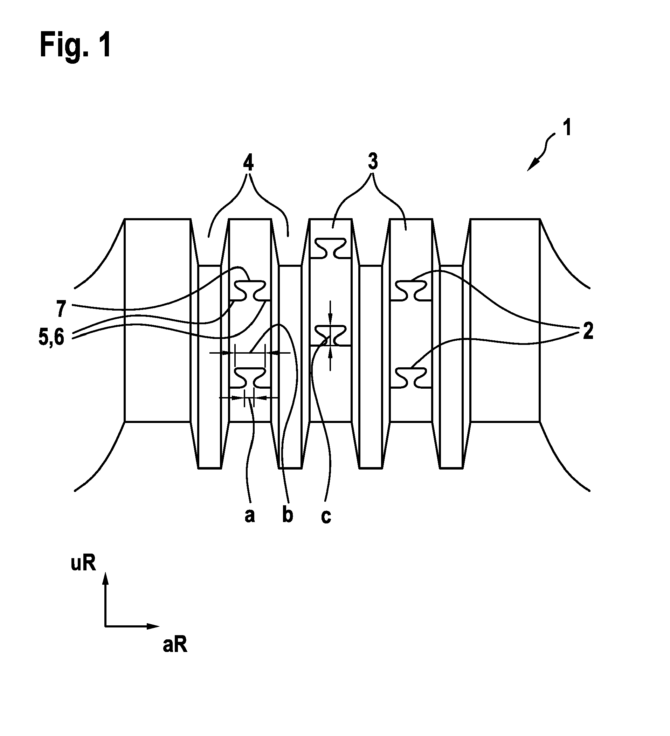

Die **Fig. 1** zeigt eine dreidimensionale Ansicht eines Laufstreifenprofils 1 eines Fahrzeugreifens mit Feineinschnitten 2 in den Profilbändern 3. Jedes Profilband 3 ist beidseitig von Umfangsrillen 4 begrenzt. Der Feineinschnitt 2 durchquert das Profilband 3 in axialer Richtung aR vollständig. Der Feineinschnitt 2 weist - in Aufsicht - eine etwa Ωförmige bzw. pilzartige Geometrie aus zwei in etwa in axialer Richtung aR auf einer gemeinsamen gedachten Geraden angeordneten, mit einem Abstand a voneinander beabstandeten axialen Abschnitten 5, 6 und einer zwischen diesen Abschnitten 5, 6 angeordneten, in etwa in Umfangsrichtung uR ausgerichteten mittigen Vorwölbung 7 mit einer in axialer Richtung aR gemessenen maximalen Ausdehnung b auf, wobei a < b. In Aufsicht auf den Feineinschnitt 2 sind alle Richtungsänderungen im Feineinschnittverlauf durch Radien gebildet.

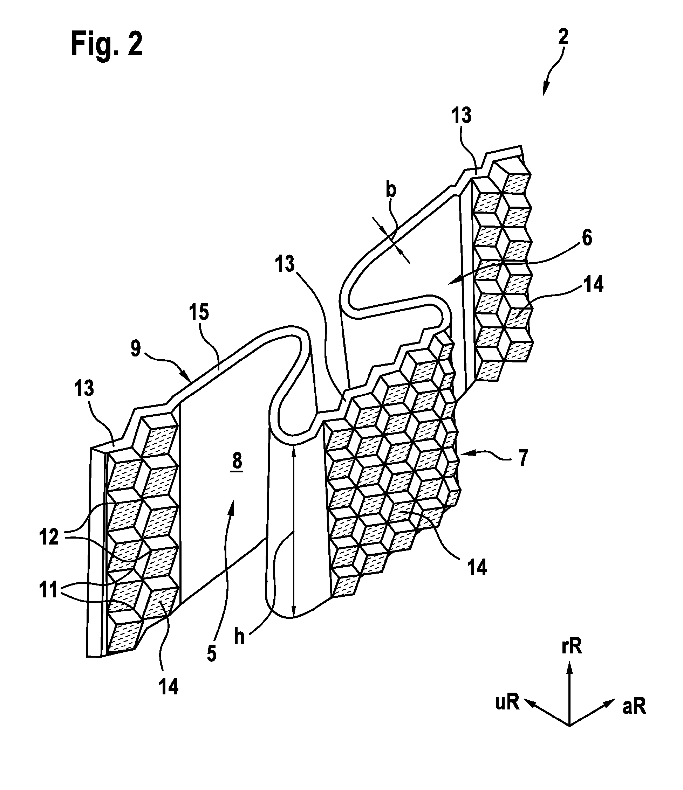

Die **Fig. 2** zeigt eine dreidimensionale Darstellung eines Feineinschnittes 2 des Laufstreifenprofils 1 der Fig. 1. Dargestellt sind die beiden Feineinschnittwände 8, 9, welche zwischen sich einen Hohlraum 15 einschließen. Die Feineinschnittwände 8, 9 der axialen Abschnitte 5, 6 und die Feineinschnittwände 8, 9 des sich axial erstreckenden Bereiches der Vorwölbung 7 weisen eine würfel- oder pyramidenähnliche Struktur 14 auf. Die Struktur 14 ist derart angeordnet, dass es quer zur Längserstreckung des Feineinschnittes 2 punktförmige tiefste Stellen 11 und punktförmige höchste Stellen 12 gibt. Während des Betriebes des Reifens verschränken sich die beiden Feineinschnittwände 8, 9, so dass das Profilband, welches diesen Feineinschnitt 2 aufweist, steifer wird und Vorteile im Trockenbremsen bringt. Die würfel- oder pyramidenähnliche Struktur 14 ist über die gesamte Höhe h der Feineinschnittwände 8, 9 angeordnet. An der Oberfläche des Laufstreifens sind im Bereich der ausstreichenden würfel- oder pyramidenähnliche Struktur 14 zusätzliche Kanten in Zick-Zack-Form 13 für verbesserte Wintereigenschaften zur Verfügung gestellt. In den axialen Abschnitten 5, 6 ist die würfel- oder pyramidenähnliche Struktur 14 an den jeweiligen Kantenbereichen ausgebildet und nimmt weniger als 50% der Fläche der axialen Abschnitte 5, 6 ein. Die Breite b des Feineinschnittes 2 bleibt über dessen Längserstreckung und über dessen Tiefenverlauf gleich.

**Bezugszeichenliste (Teil der Beschreibung)**

| | |
|---|---|
| 1 | Laufstreifenprofil |
| 2 | Feineinschnitt |
| 3 | Profilband |
| 4 | Umfangsrille |
| 5 | axialer Abschnitt |
| 6 | axialer Abschnitt |
| 7 | Vorwölbung |
| 8 | Feineinschnittwand |
| 9 | Feineinschnittwand |
| 10 | Hinterschneidung |
| 11 | punktförmig tiefste Stelle |
| 12 | punktförmig höchste Stelle |
| 13 | Kanten in Zick-Zack-Form |
| 14 | würfel- oder pyramidenähnliche Struktur |
| 15 | Hohlraum |
| | |
| | |
| b | Breite des Feineinschnittes |
| h | Höhe der Feineinschnittwand |
| | |
| rR | radiale Richtung |
| aR | axiale Richtung |
| uR | Umfangsrichtung |

## Patentansprüche

1. Laufstreifenprofil (1) eines Fahrzeugreifens mit Profilpositiven wie Profilblöcken oder Laufstreifenbändern (3), welche Feineinschnitte (2) aufweisen, wobei der Feineinschnitt durch zwei parallel zueinander und beabstandet voneinander angeordneten Feineinschnittwänden (8, 9) gebildet ist und wobei der Feineinschnitt (2) in Aufsicht eine etwa Ω-förmige Geometrie aufweist:
- mit zwei in etwa in axialer Richtung angeordneten axialen Abschnitten (5,6), welche auf einer gemeinsamen, gedachten Geraden mit einem Abstand (a) zueinander angeordnet sind,
- mit einer zwischen diesen axialen Abschnitten (5, 6) angeordneten mittigen Vorwölbung (7), wobei die Vorwölbung (7) eine in axialer Richtung gemessene maximale Ausdehnung (b) aufweist und
- wobei a < b ist, so dass Hinterschneidungen (10) gebildet sind, **dadurch gekennzeichnet, dass**
die Feineinschnittwände (8, 9) der axialen Abschnitte (5, 6) und/oder die Feineinschnittwände (8, 9) des sich axial erstreckenden Bereiches der Vorwölbung (7) eine würfel- oder pyramidenähnliche Struktur (14) aufweisen, wobei die Struktur (14) derart angeordnet ist, dass es quer zur Längserstreckung des Feineinschnittes (2) punktförmige tiefste Stellen (11) und punktförmige höchste Stellen (12) gibt.

2. Laufstreifenprofil nach Anspruch 1,
**dadurch gekennzeichnet, dass** die würfel- oder pyramidenähnliche Struktur (14) über die gesamte Höhe (h) der Feineinschnittwände (8, 9) angeordnet ist.

3. Laufstreifenprofil nach Anspruch 1, **dadurch gekennzeichnet, dass** die würfel- oder pyramidenähnliche Struktur (14) etwa 2/3 der Höhe (h) der Feineinschnittwände einnimmt, wobei die Struktur (14) von der Profiloberfläche beginnend, angeordnet ist.

4. Laufstreifenprofil nach einem oder mehreren der vorangehenden Ansprüche, **dadurch gekennzeichnet, dass**, in Aufsicht auf den Feineinschnitt (2), dessen Richtungsänderungen im Feineinschnittverlauf durch Radien gebildet sind.

5. Fahrzeugluftreifen, **dadurch gekennzeichnet, dass** dieser ein Laufstreifenprofil (1) gemäß eines oder mehrerer der vorangehenden Ansprüche aufweist.

6. Fahrzeugluftreifen nach Anspruch 5, **dadurch gekennzeichnet dass** dieser ein Nutzfahrzeugreifen oder ein PKW-Reifen ist.
